# EUROPÄISCHE PATENTSCHRIFT

(11) **EP 2 024 793 B1**
(45) Veröffentlichungstag und Bekanntmachung des Hinweises auf die Patenterteilung: **02.12.2009**
(21) Anmeldenummer: 07729427.0
(22) Anmeldetag: 23.05.2007
(51) Int. Cl.: G03H 1/08, G06T 15/00

(54) **VERFAHREN UND EINRICHTUNG ZUM RENDERN UND GENERIEREN COMPUTER-GENERIERTER VIDEOHOLOGRAMME**
METHOD AND DEVICE FOR RENDERING AND GENERATING COMPUTER-GENERATED VIDEO HOLOGRAMS
PROCÉDÉ ET DISPOSITIF PERMETTANT DE RESTITUER ET DE GÉNÉRER DES HOLOGRAMMES VIDÉO GÉNÉRÉS PAR ORDINATEUR

(30) Priorität: 23.05.2006 DE 102006025096
(43) Veröffentlichungstag der Anmeldung: 18.02.2009
(73) Patentinhaber: SeeReal Technologies S.A., 5365 Munsbach (LU)
(72) Erfinder: SCHWERDTNER, Alexander, 01307 Dresden (DE)
(74) Vertreter: Bradl, Joachim
(86) Internationale Anmeldenummer: PCT/EP2007/054989
(87) Internationale Veröffentlichungsnummer: WO 2007/135165

(56) Entgegenhaltungen:
- WO-A-2006/066906
- LUCENTE M: "INTERACTIVE THREE-DIMENSIONAL HOLOGRAPHIC DISPLAYS: SEEING THE FUTURE IN DEPTH" COMPUTER GRAPHICS, ACM, US, Mai 1997 (1997-05), Seiten 63-67, XP000931327 ISSN: 0097-8930
- SHIMOBABA T ET AL: "Electroholographic display unit for three-dimensional display by use of special-purpose computational chip for holography and reflective LCD panel" OPTICS EXPRESS, OPTICAL SOCIETY OF AMERICA, WASHINGTON, DC,, US, Bd. 13, Nr. 11, 30. Mai 2005 (2005-05-30), Seiten 4196-4201, XP002402619 ISSN: 1094-4087
- ZIV SOFERMAN ET AL: "Advanced Graphics Behind Medical Virtual Reality: Evolution of Algorithms, Hardware, and Software Interfaces" PROCEEDINGS OF THE IEEE, IEEE. NEW YORK, US, Bd. 86, Nr. 3, März 1998 (1998-03), XP011043998 ISSN: 0018-9219
- ZIEGLER R ET AL: "A framework for holographic scene representation and image synthesis" IEEE TRANSACTIONS ON VISUALIZATION AND COMPUTER GRAPHICS IEEE USA, Bd. 13, Nr. 2, März 2007 (2007-03), Seiten 403-415, XP002448574 ISSN: 1077-2626

## Beschreibung

### Gebiet der Erfindung

Die Erfindung betrifft ein Verfahren und eine Einrichtung zum Rendern und Generieren computer-generierter Videohologramme CGVH aus Bilddaten mit Tiefeninformation in Echtzeit. Im Bereich des Renderns betrifft die Erfindung die so genannte 3D-Rendering-Pipeline, welche die Algorithmen von der vektoriellen, mathematischen Beschreibung einer Szene zum gerasterten Bild auf dem Monitor umfasst. Die Bilddaten beinhalten Tiefeninformation sowie in der Regel zusätzliche Beschreibungen zu Material- und Oberflächeneigenschaften.

In der 3D-Rendering-Graphikpipeline erfolgt beispielsweise die Umrechnung von Bildschirmkoordinaten in Gerätekoordinaten, Texturierung, Clipping, sowie das Antialiasing. Das gerasterte Bild, eine 2D-Projektion der Szene, das im Framebuffer eines Grafikadapters gespeichert wird, enthält nunmehr die Daten der Pixelwerte für die steuerbaren Pixel eines Monitors, beispielsweise eines LCD- Displays.

Im Bereich computer-generierter Videohologramme betrifft die Erfindung eine so genannte holographische Graphikpipeline. In dieser Pipeline erfolgt die Generierung komplexer Hologrammwerte als Pixelwerte für ein Lichtmodulatormittel SLM. Bei der Erstellung holographischer Daten betrifft die Erfindung eine Transformation von Teilbereichen der Szene, wobei durch die Transformation die Ausbreitung der Lichtwellen beschrieben wird. Bei der holographischen Darstellung der 3D-Objekte oder Szenen wird eine Lichtwellenfront durch die Interferenz und Überlagerung kohärenter Lichtwellen generiert.

Im Gegensatz zu klassischen Hologrammen, die als Interferenzmuster photographisch oder auf andere Weise gespeichert sind, existieren CGVH als Ergebnis der Berechnung von Hologrammdaten aus Sequenzen einer Szene und ihrer Speicherung mit elektronischen Mitteln.

Moduliertes interferenzfähiges Licht breitet sich im Raum vor den Augen eines Betrachters als eine durch die Amplituden- und oder Phasenwerte steuerbare Lichtwellenfront zur Rekonstruktion einer Szene aus. Dabei bewirkt das Ansteuern eines Lichtmodulatormittels mit den Hologrammwerten der Videohologramme, dass das vom Displayschirm ausgehende, in Pixeln modulierte Wellenfeld durch Interferenzen in den Raum die gewünschte Szene rekonstruiert.

Die zur Anwendung der Erfindung bevorzugte holographische Wiedergabeeinrichtung enthält wenigstens ein Bildschirmmittel. Dabei wird als Bildschirmmittel entweder der Lichtmodulator selbst bezeichnet, in dem das Hologramm einer Szene kodiert ist, oder ein optisches Element - beispielsweise Linse oder Spiegel -, auf das ein im Lichtmodulator kodiertes Hologramm oder eine im Lichtmodulator kodierte Wellenfront einer Szene abgebildet wird. Die Festlegung des Bildschirmmittels und die zugehörigen Prinzipien zur Rekonstruktion der Szene in den Sichtbarkeitsbereich sind durch Dokumente des Anmelders beschrieben. In den Dokumenten WO 2004/044659 sowie WO 2006/027228 ist das Bildschirmmittel der Lichtmodulator selbst. Im Dokument WO 2006119760, Projektionsvorrichtung und Verfahren zur holographischen Rekonstruktion von Szenen ist das Bildschirmmittel ein optisches Element, auf das ein im Lichtmodulator kodiertes Hologramm abgebildet wird. In DE 10 2006 004 300, Projektionsvorrichtung zur holographischen Rekonstruktion von Szenen, ist das Bildschirmmittel ein optisches Element, auf das eine im Lichtmodulator kodierte Wellenfront der Szene abgebildet wird. WO 2006/066919 des Anmelders beschreibt ein Verfahren zum Berechnen von Videohologrammen.

In diesem Dokument wird als Lichtmodulatormittel beziehungsweise SLM eine Einrichtung zum Steuern der Intensität, Farbe und/oder Phase durch Schalten, Austasten oder Modulieren von Lichtstrahlen einer oder mehrerer unabhängiger Lichtquellen bezeichnet. Eine holographische Wiedergabeeinrichtung beinhaltet in der Regel eine Matrix steuerbarer Pixel, wobei die Pixel die Amplitude und/oder Phase von durchstrahlenden Lichts verändern und so die Objektpunkte rekonstruieren. Ein Lichtmodulatormittel umfasst eine derartige Matrix. Das Lichtmodulatormittel kann beispielsweise diskret als Akusto-optischer Modulator AOM oder auch kontinuierlich aufgeführt sein. Eine Ausführung zur Rekonstruktion der Hologramme durch Amplitudenmodulation kann mit einem Liquid Crystal Display (LCD) erfolgen. Die vorliegende Erfindung bezieht sich ebenso auf weitere steuerbare Vorrichtungen um hinreichend kohärentes Licht zu einer Lichtwellenfront oder zu einem Lichtwellenrelief zu modulieren.

In diesem Dokument bezeichnet der Begriff ,Pixel' ein steuerbares Hologrammpixel im SLM; ein Pixel wird durch einen diskreten Wert eines Hologrammpunkts einzeln adressiert und angesteuert. Jedes Pixel stellt einen Hologrammpunkts des Videohologramms dar. Bei einem LCD wird daher der Begriff 'Pixel' für die einzeln adressierbaren Bildpunkte des Bildschirms verwendet. Bei einem DLP wird der Begriff ,Pixel' für einen einzelnen Mikrospiegel oder eine kleine Gruppe von Mikrospiegeln verwendet. Bei einem kontinuierlichen SLM ist ein Pixel die Übergangsregion auf dem SLM, die einen komplexen Hologrammpunkt repräsentiert. Der Begriff ,Pixel' bezeichnet daher ganz allgemein die kleinste Einheit, die einen komplexen Hologrammpunkt repräsentieren, also anzeigen kann.

### Technischer Hintergrund und Stand der Technik

Ein ,Betrachterfenster' ist ein begrenzter virtueller Bereich, durch welchen der Betrachter die gesamte rekonstruierte Szene mit ausreichend großer Sichtbarkeit ansehen kann. Das Betrachterfenster befindet sich auf den oder nahe der Augen des Betrachters. Das Betrachterfenster kann in die Richtungen X, Y und Z bewegt werden. Innerhalb des Betrachterfensters überlagern sich die Wellenfelder so, dass das rekonstruierte Objekt für den Betrachter sichtbar wird. Die Fenster liegen in Augennähe des Betrachters, können mit bekannten Positionserkennungs- und Nachführeinrichtungen der aktuellen Betrachterposition nachgeführt werden. Damit können sie vorteilhaft auf eine Größe, die wenig über der Pupillengröße liegt, begrenzt werden. Es ist möglich, zwei Betrachterfenster zu verwenden, nämlich eines für jedes Auge Aufwändigere Anordnungen von Betrachterfenstern sind ebenfalls möglich Es ist ferner möglich, Videohologramme so zu kodieren, dass für den Betrachter einzelne Objekte oder die ganze Szene scheinbar hinter dem Lichtmodulator liegen.

Der Begriff ,Transformation' ist so weit auszulegen, dass er jede mathematische oder rechnerische Technik einschließt, die einer Transformation gleichkommt oder diese annähert. Transformationen im mathematischen Sinne sind lediglich Annäherungen physischer Prozesse, die genauer durch die Maxwellschen Wellenausbreitungsgleichungen beschrieben werden. Transformationen wie etwa Fresneltransformationen oder die spezielle Gruppe von Transformationen, die als Fouriertransformationen bekannt sind, beschreiben Annäherungen zweiter Ordnung. Transformationen führen in der Regel auf algebraische und nicht differentielle Beschreibungen und können folglich rechentechnisch effizient und performant gehandhabt werden. Überdies können sie präzise als optischen Systeme modelliert werden.

WO 2006/066919 des Anmelders stellt Stand der Technik nach Art 54(3) EPU dar und beschreibt ein Verfahren zum Berechnen von computer-generierten Videohologrammen. Es ordnet Objekte mit komplexen Amplitudenwerten einer Szene in Rasterpunkten von parallelen, virtuellen Schnittebenen zu, um zu jeder Schnittebene einen separaten Objektdatensatz mit diskreten Amplitudenwerten in Rasterpunkten zu definieren und aus den Bilddatensätzen eine holographische Kodierung für das Lichtmodulatormittel einer holographischen Wiedergabeeinrichtung zu berechnen.

Die Lösung der Aufgabe nutzt gemäß der Erfindung den Grundgedanken, computergestützt die folgenden Schritte durchzuführen:
- aus jedem Objektdatensatz jeder tomographischen Szeneschnittfläche wird ein Beugungsbild in Form einer separaten zweidimensionalen Verteilung von Wellenfeldern für eine Betrachterebene mit einem endlichen Abstand parallel zu den Schnittebenen berechnet, wobei die Wellenfelder aller Schnitte für mindestens ein gemeinsames virtuelles Fenster berechnet werden, das in der Betrachterebene nahe den Augen eines Betrachters liegt und dessen Fläche gegenüber dem Videohologramm reduziert ist,
- die berechneten Verteilungen aller Schnittebenen werden zur Beschreibung eines gemeinsamen Wellenfeldes für das Fenster in einem zur Betrachterebene referenzierten Datensatz addiert und
- der Referenzdatensatz wird zum Erzeugen eines Hologrammdatensatzes für ein gemeinsames Computer generiertes Hologramm der Szene in eine von der Referenzebene endlich entfernte, parallele Hologrammebene transformiert, wobei in der Hologrammebene das Lichtmodulatormittel liegt, mit welchem nach entsprechender Kodierung die Szene in den Raum vor den Augen des Betrachters rekonstruiert wird.

Den genannten Verfahren und holographischen Wiedergabeeinrichtungen liegt dabei im Wesentlichen der Gedanke zugrunde, vorrangig nicht das Objekt der Szene zu rekonstruieren, sondern jene Wellenfront, die das Objekt aussenden würde, in ein oder mehrere Betrachterfenster zu rekonstruieren. Durch die virtuellen Betrachterfenster kann der Betrachter die Szene sehen. Die virtuellen Betrachterfenster überdecken die Pupillen des Betrachters und werden mit bekannten Positionserkennungs- und Nachführeinrichtungen der aktuellen Betrachterposition nachgeführt. Zwischen dem Lichtmodulatormittel der holographischen Wiedergabeeinrichtung und den Betrachterfenstern ist ein virtueller pyramidenstumpfförmiger Rekonstruktionsraum, das so genannte Frustum, aufgespannt, wobei das Lichtmodulatormittel die Grundfläche und das Betrachterfenster die Deckfläche bildet. Bei sehr kleinen Betrachterfenstern kann der Pyramidenstumpf als Pyramide angenähert werden. Der Betrachter sieht durch die virtuellen Betrachterfenster in Richtung der holographischen Wiedergabeeinrichtung und nimmt im Betrachterfenster die Wellenfront auf, welche die Szene repräsentiert.

Aufgabe der Erfindung ist es, ein Verfahren zu schaffen, welches erlaubt, in Echtzeit Videohologramme aus Bilddaten mit Tiefeninformation zu generierten. Eine weitere Aufgabe besteht darin, die 3D-Rendering-Grafikpipeline schaltbar so zu erweitern, dass wahlweise einerseits mit der 3D-Rendering-Grafikpipeline Pixelwerte für die steuerbaren Pixel eines Monitors und andererseits mit der holographischen Graphikpipeline komplexe Hologrammwerte für die Pixel eines Lichtmodulatormittels einer holographischen Wiedergabeeinrichtung zur Rekonstruktion einer Szene generiert werden können.

Im Weitern sollen insbesondere derzeit verfügbarere Graphikprozessoren und Grafik-Subsysteme, beispielsweise für Graphikkarten und Spielekonsolen eingesetzt werden. Ohne Beschränkung der Allgemeinheit sollen derzeitige festgelegte Industriestandards bezüglich Hardware, Software und Programmschnittstellen verwendet werden.

### Zusammenfassung der Erfindung

Das erfindungsgemäße Verfahren wird nachfolgend in den Grundgedanken dargestellt, wobei auf Optimierungen verzichtet wird.
Ausgangspunkt des Verfahrens sind Bilddaten mit Tiefeninformation. Diese Information liegt beispielsweise als Beschreibung in Form von Vertices, Normalenvektoren und Matrizen vor. Die Bilddaten enthalten in der Regel zusätzliche Beschreibungen zu Material- und Oberflächeneigenschaften und dergleichen.

Eine so genannte 3D-Rendering-Pipeline oder Grafikpipeline beschreibt beim Echtzeitrendering den Weg von der vektoriellen, mathematischen Beschreibung einer Szene zu gerasterten Bilddaten in einem Framebuffer zur Darstellung auf einem Monitor. In der Pipeline erfolgt beispielsweise die Umrechnung von Bildschirmkoordinaten in Gerätekoordinaten, Texturierung, Clipping, sowie das Antialiasing. Das gerasterte Bild, eine 2D-Projektion der Szene, das im Framebuffer eines Grafikadapters gespeichert wird, enthält nunmehr die Daten der Pixelwerte für die steuerbaren Pixel eines Monitors, beispielsweise eines LCD- Displays. Die 3D-Pipeline ist dadurch gekennzeichnet, dass einzelne Primitive, wie beispielsweise Punkte und Dreiecke, parallel verarbeitet werden können. Während beispielsweise ein Dreieck vom Modell- in das Augenkoordinatensystem umgewandelt wird, wird ein anderes bereits rasterisiert, also schattiert.

Zur holographischen Darstellung wird durch Phasen- und/oder Amplitudenmodulation interferenzfähigen Lichts die Szene durch Überlagerung von Interferenzmustern rekonstruiert. Auch für das Generieren der Videohologramme aus Bilddaten mit Tiefeninformation wird in einem ersten Verfahrenschritt diese 3D-Rendering Graphikpipeline verwendet. Anschließend basiert die Generierung holographischer Daten auf einer Transformation der Szene, wobei die Transformation die Ausbreitung der Lichtwellen beschreibt. Nach einer Rücktransformation erfolgt das Kodieren, wobei die generierten komplexen Hologrammwerte in Pixelwerte für das Lichtmodulatormittel umgewandelt werden.

Der Erfindung liegt der Gedanke zugrunde, eine bestehende und verfügbare 3D-Rendering-Graphikpipeline zur Darstellung von 2D/3D Szenen auf Displays derart schaltbar zu erweitern, dass sowohl eine Darstellung als 2D/3D als auch die Generierung von Videohologrammen gewährleistet ist. Dadurch werden mit der 3D-Rendering-Graphikpipeline die Pixelwerte für die steuerbaren Pixel eines Monitors generiert. Gleichzeitig oder alternativ erfolgt schaltbar durch eine holographische Graphikpipeline schließlich das Ansteuern eines Lichtmodulators mit den kodierten Hologrammwerten.

Die holographische Graphikpipeline umfasst in einem ersten Verfahrensschritt das so genannte Slicing, wobei hier das Separieren des kanonischen Bildraumes in Schichten erfolgt. Die Szene wird dabei durch jeweils zwei parallele Schnittebenen in Schichten geteilt und in Szeneschnittdaten separiert. Die Ebenen sind vorzugsweise senkrecht zur Positionsrichtung eines Betrachters und der Abstand zwischen den Schnittebenen ist dabei so hinreichend klein gewählt, dass einerseits die Berechnungsgenauigkeit aber auch die Perfomanz des Verfahrens gewährleistet ist. Idealerweise sollte der Abstand sehr klein sein, so dass nur Tiefeninformationen, welche sich in einem konstanten Abstand zum Betrachter befinden, in den Berechnungen berücksichtigt werden müssen. Ist der Abstand zwischen den Ebenen größer, so werden die Tiefeninformationen geeignet gewählt, beispielsweise als Abstandsmittelwert der beiden Ebenen festgelegt und einer Schicht zugeordnet.

Eine nachfolgende Viewportoperation wandelt kanonische Bildkoordinaten in Pixelkoordinaten des Ausgabefensters um. Anschließend erfolgt die Rasterisierung sowie vorzugsweise zusätzliche optimierende Pixeloperationen, beispielsweise das Blending.

Im nachfolgenden Verfahrensschritt erfolgt das Transformieren der Szeneschnittdaten. In der allgemeinsten Form wird bei einer Transformation die Ausbreitung der Lichtwellen in das virtuelle Betrachterfenster propagiert. Die einfachsten Transformationen liegen dabei als Fourier- oder FresnelTransformationen vor. Die Fourier-Transformation wird vorzugsweise im Fernbereich verwendet, wo aufgrund des größeren Abstands zum Betrachter die Lichtwellen als ebene Wellenfront interpretiert werden können. Die Fourier-Transformation weist im Vergleich zu anderen Transformationen den Vorteil auf, dass sich die Transformation durch optische Elemente - und umgefcehrt - modellieren lässt. Im Nahbereich einer Kugelwelle wird vorzugsweise eine Fresnel-Transformation verwendet.

In weiterer Folge wird das Transformieren so lange wiederholt, bis nach einem sukzessiven Verschieben der Schnittebenen in Positionsrichtung die gesamte Szene transformiert ist. Die transformierten Daten der Szeneschichtdaten werden dabei sukzessive zu einem gemeinsamen Referenzdatensatz aufaddiert. Nach der Transformation der gesamten Szene repräsentiert dieser Referenzdatensatz die Summe der Transformationen der einzelnen Szeneschnittdaten.
In einem nächsten Verfahrensschritt erfolgt das Rücktransformieren, wobei die Referenzdaten in eine endlich entfernte, parallele Hologrammebene am Ort eines Lichtmodulatormittels zu Hologrammdaten für das Videohologramm transformiert werden. Im letzen Verfahrensschritt erfolgt das Kodieren, wobei nach einer Normierung die Umwandlung in Pixelwerte erfolgt. Im Falle der Burckhardt-Kodierung wird der komplexe Hologrammwert durch drei Werte repräsentiert, die jeweils in den Wertebereich 0 bis 1 normiert sind, wobei der durch 1 repräsentierte Wert den maximal erzielbaren Komponentenwert begrenzt.
Die kodierten Pixelwerte werden nunmehr in einem Framebuffer an das Lichtmodulatormittel übermittelt, welche nunmehr durch Phasen- und/oder Amplitudenmodulation interferenzfähigen Lichts die Szene durch Überlagerung von Interferenzmustern rekonstruiert.

Für die Generierung farbiger Bildinhalte wird das Verfahren analog für jede einzelne Farbkomponente angewendet. Um das farbige Videohologramm durch räumliches Multiplexing darzustellen, kann jedes Pixel Subpixel für die Darstellung oder Anzeige der farbigen Hologrammpunkte in jeder der drei Grundfarben enthalten. Abhängig von der Art der Kodierung des Videohologramms können weitere Subpixel zum Darstellen der Grundfarben eines jeden farbigen Hologrammpunkts vorhanden sein. Eine weitere bevorzugte Methode ist das zeitsequentielle Multiplexing.

In einer Weiterführung der Erfindung werden zur Abarbeitung einer Sequenz von Szenen die 3D-Rendering-Graphikpipeline und die holographischen Graphikpipeline parallelisiert.
Der ersten Schrittfolge der 3D-Rendering-Graphikpipeline sind dabei zum Speichern der Ergebnisdaten einer Folge von Szenen der Videosequenz mehrere Speicherbereiche als Visible-Scene-Buffer zugeordnet.
Vorzugsweise sind mehreren nachfolgenden Szenen zur Speicherung der Ergebnisdaten je ein Visible-Scene-Buffer zugeordnet. Aus diesen Daten werden nunmehr von einer oder mehreren holographischen Graphikpipelines Hologrammwerte generiert. Vorzugsweise ist jedem Visible-Scene-Buffer eine holographische Graphikpipeline zugeordnet.

Im Weiteren ist eine steuernde Scheduling-Einheit vorgesehen, welche die erste Schrittfolge der 3D-Rendering-Graphikpipeline, die Visible-Scene-Buffer sowie die holographischen Graphikpipelines zeitsequentiell optimal steuert. Die Steuerung umfasst einerseits die optimale Auslastung der vorhandenen Ressourcen sowie das optimale Scheduling der Abarbeitung einzelner Szenen. Die Steuereinheit optimiert ebenso die Diskretisierung der Szene, also die Anzahl der Schichten der Szene und den Abstand der Schichten. Im Nahbereich ist eine feine Diskretisierung vorteilhaft, hingegen ist in der Regel im Fernbereich eine gröbere Diskretisierung ausreichend.

Mit dem erfindungsgemäßen Verfahren ist eine Generierung komplexer Hologrammwerte in Echtzeit gewährleistet. Die erfindungsgemäße schaltbare Erweiterung der 3D-Rendering-Graphikpipeline erlaubt jedoch ebenso die Verwendung eines herkömmlichen Monitors. Die Erfindung erlaubt das wahlweise, und sogar das parallele Betreiben eines herkömmlichen Monitors und einer holographischen Wiedergabeeinrichtung, wobei die Kompatibilität zu bestehenden Industriestandards und Konventionen gewährleistet ist. Dieser Vorteil der Erfindung gewährleistet eine wesentliche technische und wirtschaftliche Akzeptanz der neuen Technologie der holographischen Darstellung.

### Bevorzugte Ausführungsformen der Erfindung

Weitere Aspekte und Detaillierungen der Erfindung werden in den nachfolgenden Ausführungsbeispielen und anhand der beigefügten Figuren erläutert. Insbesondere wird dabei eine weiterführende Parallelisierung der Verfahrenschritte erläutert.

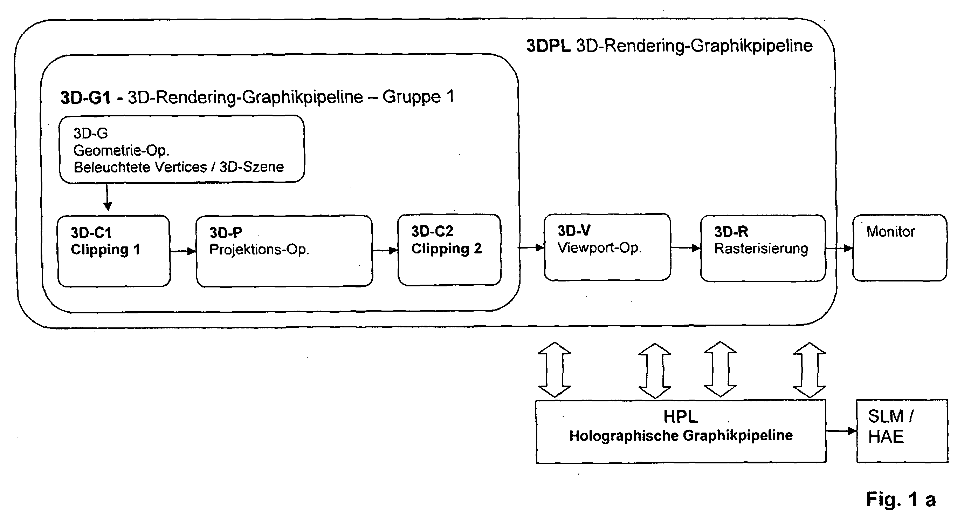

Fig. 1a zeigt ein Ablaufschema des Verfahrens und zeigt die Verfahrensschritte der 3D-Rendering-Graphikpipeline (3DPL) sowie der darin implementierten holographischen Graphikpipeline (HPL). Die Schritte der 3D-Rendering-Graphikpipeline sind in der Figur rund (3DG) und jene der holographischen Graphikpipeline quadratisch dargestellt.
Die 3D-Rendering-Graphikpipeline umfasst eine erste und eine zweite Schrittfolge. Die erste Folge (3D-G1) umfasst Geometrieoperationen (3D-G) und Clippingoperationen (3D-C1,2). Geometrieoperationen (3D-G) umfassen im Wesentlichen Modelloperationen, Weltoperationen, Viewingoperationen sowie Projektionsoperationen (3D-P).
Die Projektionsoperationen umfassen hier die Überführung des Rekonstruktionsraums, des Frustums, in einen normierten kanonischen Objektraum. Dieser Objektraum ist je nach Art des Grafiksystems würfel- oder quaderförmig. Im Weiteren wird dieser Raum normiert. Diese Operation bewirkt, dass die Vertices von einem perspektivischen Raum in den normierten Raum der Paralleltransformation übergeführt werden.

Mit Clippingoperationen ist das Kappen der Geometrien an den Begrenzungen der Sichtbarkeitspyramide, sowie das Kappen durch zusätzliche benutzerdefinierte Schnittebenen beschrieben. Beleuchtungsoperationen beachten unter anderem ambiente Beleuchtung, diffuse Beleuchtung, speculare Beleuchtung, emissive Beleuchtung, welche durch arithmetische Operationen mit den Materialeigenschaften der Oberflächen einen neuen Farbwert berechnen, der von den Positionen des Betrachters und der Lichtquellen abhängt und somit eine Schattierung dieser Oberfläche bewirken.

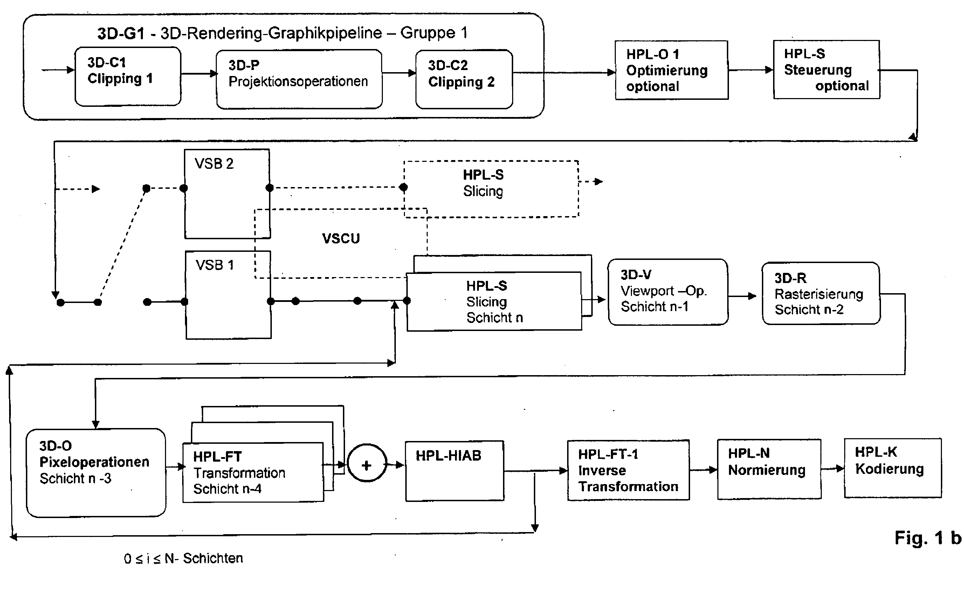

Figur 1b zeigt eine weitere Detaillierung des Verfahrens. Die Ergebnisse der ersten Schrittfolge (3D-G1) werden in einem so genannten Visible-Scene-Buffer (VSB) abgelegt. Im Visible-Scene-Buffer (VSB) im Sinne von Speicherbereichen sind Informationen über Geometrie, also Vertices, Farben, Normalen, Texturkoordinaten. Im Visible Scene Buffer (VSB) befinden sich die Geometrien bereits in dem Zustand, wo alle Vertexoperationen abgeschlossen worden sind, also an die Vertices wurden in Abhängigkeit ihres Platzes innerhalb der Sichtbarkeitshierarchie ein bis mehrere Modelloperationen angewendet. Ausgehend von den Daten im Visible Scene Buffer (VSB) erfolgt nun in einer holographischen Graphikpipeline (HPL) die Generierung komplexer Hologrammwerte als Pixelwerte für einen Lichtmodulator (SLM). Die holographische Graphikpipeline (HPL) umfasst in einem ersten Verfahrensschritt das so genannte Slicing (HPL-S), wobei hier das Separieren des kanonischen Bildraumes in Schichten erfolgt.
Eine nachfolgende Viewportoperation (3D-V) wandelt kanonische Bildkoordinaten in Pixelkoordinaten des Ausgabefensters um. Anschließend erfolgt die Rasterisierung (3D-R) sowie vorzugsweise zusätzliche optimierende Pixeloperationen (3D-O), beispielsweise das Blending.

Im nachfolgenden Verfahrensschritt erfolgt das Transformieren (HPL-FT) der Szeneschnittdaten in das virtuelle Betrachterfenster. Diese Schritte werden wiederholt, bis die gesamte Szene transformiert wurde. Die transformierten Daten der Szeneschichtdaten werden dabei sukzessive zu einem gemeinsamen Referenzdatensatz (HPL-HIAB), einem so genannte Holographic Accumulation Image Buffer aufaddiert. Nach der Transformation der gesamten Szene repräsentiert dieser Referenzdatensatz (HPL-HIAB) die Summe der Transformationen der einzelnen Szeneschnittdaten.
In einem nächsten Verfahrensschritt erfolgt das Rücktransformieren (HPL-FT-1) der Daten des Holographic Accumulation Image Buffer (HPL-HIAB). Im letzen Verfahrensschritt erfolgt das Kodieren (HPL-K), wobei nach einer Normierung (HPL-N) die Umwandlung in Pixelwerte erfolgt. Wird keine Generierung von Hologrammdaten gewünscht, so können mit den Schritten der 3D-Rendering Graphikpipeline, also Geometrieoperationen (3D-G), Clippingoperationen(3D-C1,2), Beleuchtungsoperationen, Viewportoperation (3D-V), Rasterisierung(3D-R) sowie zusätzlichen optimierenden Pixeloperationen (3DO-O) die Pixelwerte für die steuerbaren Pixel eines herkömmlichen Monitors, beispielsweise eines LCD-Displays, generiert werden.

Weitere bevorzugte Ausführungsformen der Erfindung betreffen die erweiterte Parallelisierung, die variable Verkettung und die optimierende Ausnutzung der Ressourcen mit gegebenenfalls ebenso variablen Steuerstrategien.

Hierzu ist mindestens eine steuernde Scheduling-Einheit (HPL-S) vorgesehen, welche nunmehr k Schrittfolgen der 3D-Rendering-Graphikpipeline, I Visible-Scene-Buffer sowie m holographischen Graphikpipelines zeitsequentiell optimal steuert. Die Verfahrensschritte des ersten Ausführungsbeispiels sind linear und zeitsequentiell mit k = I = m = 1 angeordnet. Die Steuerung umfasst einerseits die optimale Auslastung der vorhandenen Ressourcen sowie die das optimale Scheduling der Abarbeitung einzelner Szenen. Das Verhältnis der Parameter k, I, m bestimmt den grundlegenden Grad der Parallelisierung, welcher jedoch von der Steuereinheit nach entsprechenden Steuerstrategien auch pro Szene variiert werden kann.
Die Steuereinheit optimiert ebenso die Diskretisierung der Szene, also die Anzahl der Schichten der Szene und den Abstand der Schichten. Im Nahbereich ist eine feine Diskretisierung vorteilhaft, hingegen ist in der Regel im Fernbereich eine gröbere Diskretisierung ausreichend. Einem einzelnen Visible-Scene-Buffer (VSB) können dabei auch mehrere holographische Graphikpipelines (HPL) zugeordnet sein, um Teilbereiche (VSBs) parallel abarbeiten zu können. Eine lokale Steuereinheit, eine so genannte Visible-Scene-Control-Unit (VSCU) steuert und überwacht diese lokale Parallelisierung. Sofern erforderlich steuert und überwacht sie ebenso den Austausch von Teilergebnissen der parallelen Prozesse. In gleicher Weise ist denkbar, dass mehrere Visible-Scene-Buffer (VSB) einer holographischen Graphikpipeline (HPL) zugeordnet sind. Analog können für eine holographische Graphikpipeline (HPL) die Schritte Transformieren (HPL-FT) und/oder Rücktransformieren (HPL-FT-1) parallefisiert sein. Die Steuereinheit steuert und gewährleistet die Abarbeitung der Szeneschichtdaten in der dem Gesamtverfahren zugrunde liegenden korrekten Reihenfolge. Weiterführende Parallelisierungen zur Absicherung der Generierung von Hologrammdaten sind als Folge des Prinzips der Erfindung denkbar. Die Erfindung umfasst ebenso eine Einrichtung mit Mitteln, welche die genannten Verfahrensschritte implementieren.

## Patentansprüche

1. Verfahren zum Rendern und Generieren computer-generierter Videohologramme aus Bilddaten mit Tiefeninformation in Echtzeit,
wobei in einem ersten Modus eine 3D-Rendering-Graphikpipeline (3DPL) die Umwandlung einer Szene zu gerasterten Bilddaten als 2D-Projektion der Szene beschreibt und Pixelwerte für die steuerbaren Pixel eines Monitors generiert, wobei die Pipeline schaltbar derart erweitert ist, dass in einem zweiten Modus in mindestens einer holographischen Graphikpipeline (HPL) die Generierung komplexer Hologrammwerte und die Kodierung als Pixelwerte für ein Lichtmodulatormittel (SLM) einer holographischen Wiedergabeeinrichtung (HAE) erfolgt, wodurch gleichzeitig oder alternativ zur üblichen grafischen 2D/3D-Darstellung der Szene ein einfallendes Wellenfeld durch das Ansteuern des Lichtmodulatormittels (SLM) so moduliert wird, dass durch Interferenz im Raum die gewünschte Szene holographisch rekonstruiert wird.

2. Verfahren nach Anspruch 1, wobei die 3D-Rendering-Graphikpipeline in einer ersten Schrittfolge Koordinatenoperationen, Beleuchtungsberechnungen, Clipping, umfasst, um Eingangsdaten für die nachfolgende holographischen Graphikpipeline zu generieren.

3. Verfahren nach Anspruch 2, wobei der ersten Schrittfolge der 3D-Rendering-Graphikpipeline (3DPL) zum Speichern der Ergebnisdaten einer Folge von Szenen einer Videosequenz zusätzliche Speicherbereiche als Visible-Scene-Buffer (VSB) zugeordnet sind.

4. Verfahren nach Anspruch 3, wobei die erste Schrittfolge der 3D-Rendering-Graphikpipeline (3DPL) für mehrere nachfolgende Szenen jeweils Ergebnisdaten für einen zugeordneten Visible-Scene-Buffer (VSB) erzeugt, und aus diesen Daten von einer oder mehreren holographischen Graphikpipelines (HPL) komplexe Hologrammwerte generiert werden.

5. Verfahren nach Anspruch 4, wobei jedem Visibte-Scene-Buffer (VSB) eine Szene der Videosequenz zugeordnet ist.

6. Verfahren nach Anspruch 5 mit einer steuernden Scheduling-Einheit, welche die erste Schrittfolge der 3D-Rendering-Graphikpipeline (3DPL), die Visible-Scene-Buffer (VSB) sowie die holographischen Graphikpipelines (HPL) zeitsequentiell steuert.

7. Verfahren nach einem oder mehreren der voranstehenden Ansprüche , wobei durch die Position eines Betrachters eine Ansicht einer Szene festgelegt ist und dem Betrachter mindestens ein in einer Betrachterebene nahe der Augen liegendes virtuelles Betrachterfenster zugeordnet ist und die holographische Graphikpipeline (HPL) zum Generieren der Pixelwerte für das Lichtmodulatormittel die nachfolgenden Schritte umfasst:
-- Schritt (1): Separieren der Szenedaten in parallele Schichten zu Szeneschnittdaten zwischen jeweils zwei zur Positionsrichtung des Betrachters senkrechten Schnittebenen,
-- Schritt (2): Transformieren der Szeneschnittdaten einer Schicht in das Betrachterfenster gemäß der Propagation der von dieser Schicht ausgehenden Lichtwellen,
-- Schritt (3): Wiederholen der Schritte Separieren (1) und Transformieren (2), bis nach einem sukzessiven Verschieben der Schnittebenen in Positionsrichtung die gesamte Szene transformiert ist, wobei die Ergebnisse der einzelnen Transformationen aufaddiert werden.
-- Schritt (4): Rücktransformieren, wobei die addierten Daten von der Betrachterebene in eine endlich entfernte, parallele Hologrammebene am Ort eines Lichtmodulatormittels zu Hologrammdaten für das Videohologramm transformiert werden.
-- Schritt (5): Kodieren, wobei nach einer Normierung die Umwandlung in Pixelwerte und die Übergabe an das Lichtmodulatormittel zur Rekonstruktion der Szene erfolgt.

8. Verfahren nach Anspruch 7, wobei zur Transformation der Daten eine Fourier- oder Fresnel-Transformation verwendet wird.

9. Verfahren nach Anspruch 8, wobei das 3D-Rendern und die Transformation nur für Konturen der Szene durchgeführt werden.

10. Verfahren nach Anspruch 9, wobei das Verfahren bei einer Farbdarstellung für jede Grundfarbe angewendet wird.

11. Einrichtung zum Rendern und Generieren computer-generierter Videohologramme aus Bilddaten mit Tiefeninformation in Echtzeit, welche das Verfahren nach einem oder mehreren der Ansprüche (1 bis 10) verwendet, umfassend eine 3D-Rendering-Graphikpipeline (3DPL) welche in einem ersten Modus über die Umwandlung einer Szene zu gerasterten Bilddaten als 2D-Projektion der Szene wobei Pixelwerte für die steuerbaren Pixel eines Monitors generiert, wobei die Pipeline schaltbar derart durch mindestens eine holographische Graphikpipeline (HPL) erweitert ist, dass in einen zweiten Modus die Generierung komplexer Hologrammwerte und die Kodierung als Pixelwerte für ein Lichtmodulatormittel (SLM) einer holographischen Wiedergabeeinrichtung (HAE) erfolgt, wodurch gleichzeitig oder alternativ zur üblichen grafischen 2D/3D-Darstellung der Szene ein einfallendes Wellenfeld durch das Ansteuern des Lichtmodulatormittels (SLM) so moduliert wird, dass durch Interferenz im Raum die gewünschte Szene holographisch rekonstruiert wird.

12. Einrichtung nach Anspruch 11, wobei durch die Position eines Betrachters eine Ansicht einer Szene festgelegt ist und dem Betrachter mindestens ein in einer Betrachterebene nahe der Augen liegendes virtuelles Betrachterfenster zugeordnet ist und die holographische Graphikpipeline umfasst:
-- Mittel zum Separieren der Szenedaten in parallele Schichten zu Szeneschnittdaten zwischen jeweils zwei zur Positionsrichtung des Betrachters senkrechten Schnittebenen,
-- Mittel zum Transformieren der Szeneschnittdaten einer Schicht in das Betrachterfenster gemäß der Propagation der von dieser Schicht ausgehenden Lichtwellen,
-- Mittel zum Wiederholen der Schritte Separieren (1) und Transformieren (2), bis nach einem sukzessiven Verschieben der Schnittebenen in Positionsrichtung die gesamte Szene transformiert ist, wobei die Ergebnisse der einzelnen Transformationen aufaddiert werden.
-- Mittel zum Rücktransformieren, wobei die addierten Daten von der Betrachterebene in eine endlich entfernte, parallele Hologrammebene am Ort eines Lichtmodulatormittels zu Hologrammdaten für das Videohologramm transformiert werden.
-- Mittel zum Kodieren, wobei nach einer Normierung die Umwandlung in Pixelwerte und die Übergabe an das Lichtmodulatormittel zur Rekonstruktion der Szene erfolgt.

13. Einrichtung nach Anspruch 11 oder 12 zum Generieren von Videohologrammen für eine holographische Wiedergabeeinrichtung (HAE) mit einem Bildschirmmittel, wobei das Bildschirmmittel entweder das Lichtmodulatormittel (SLM) selbst bezeichnet, in dem das Hologramm der Szene kodiert ist, oder ein optisches Element, auf das ein im Lichtmodulatormittel kodiertes Hologramm oder eine im Lichtmodulatormittel kodierte Wellenfront der Szene abgebildet ist.

14. Holographische Wiedergabeeinrichtung nach Anspruch 13, wobei das optische Element eine Linse oder ein Spiegel ist.

## Claims

1. Method for real-time rendering and generation of computer-generated video holograms from image data with depth information, where in a first mode a 3D rendering graphics pipeline (3DPL) describes the conversion of a scene into pixelated image data in the form of a two-dimensional projection of the scene and which generates pixel values for the controllable pixels of a monitor, where the pipeline is switchable extended such that in a second mode in at least one holographic graphics pipeline (HPL) complex hologram values are generated and a light modulator means (SLM) of a holographic display device (HAE) is encoded with these pixel values, whereby simultaneously or alternatively to the usual graphic 2D/3D representation of the scene by way of controlling the light modulator means (SLM) an incident wave field is modulated such that the desired scene is holographically reconstructed through interference in space.

2. Method according to claim 1 where the 3D rendering graphics pipeline includes a first group of steps comprising coordinate operations, illumination calculations and clipping, in order to generate input data for the subsequent holographic graphics pipeline.

3. Method according to claim 2 where for the storage of resulting data of a sequence of scenes of a video sequence additional memory sections are assigned to the first group of steps of the 3D rendering graphics pipeline (3DPL) so as to form visible scene buffers.

4. Method according to claim 3 where resulting data for multiple successive scenes are generated for an assigned visible scene buffer (VSB) by the first group of steps of the 3D rendering graphics pipeline (3DPL), and where complex hologram values are generated by one or multiple holographic graphics pipelines (HPL) based on these data.

5. Method according to claim 4 where each visible scene buffer (VSB) is assigned with one scene of the video sequence.

6. Method according to claim 5 with a controllable scheduling unit which sequentially controls the first group of steps of the 3D rendering graphics pipeline (3DPL), the visible scene buffers (VSB) and the holographic graphics pipelines (HPL).

7. Method according to one or more of the above claims where the position of an observer defines a view of the scene and where the observer is assigned with at least one virtual observer window, which is situated in an observer plane near the observer eyes, and where the holographic graphics pipeline (HPL) for the generation of the pixel values for the light modulator means comprises the following process steps:
-- Step (1): Separation of the scene data into parallel layers so as to obtain scene section data between two parallel section planes, each of which is situated at right angles to the viewing direction of the observer,
-- Step 2: Transformation of the scene section data of a layer into the observer window according to the propagation of the light waves emitted by this layer,
-- Step (3): Repetition of the steps of separation (1) and transformation (2), until the entire scene is transformed after successively displacing the section planes in the viewing direction, where the results of the individual transformations are added up,
-- Step (4): Back-transformation, where the aggregated data are transformed from the observer plane into a hologram plane which coincides with the position of a light modulator means, and which is situated at a final distance and parallel to the observer plane, so as to generate hologram data for the video hologram,
-- Step (5): Encoding, where after a normalisation step the data are converted into pixel values, which are transferred to the light modulator means in order to reconstruct the scene.

8. Method according to claim 7 where a Fourier transformation or a Fresnel transformation is used for transforming the data.

9. Method according to claim 8 where the 3D rendering and transformation processes are only performed for outlines of the scene (3D-S).

10. Method according to claim 9 where for colour representation the method is applied to each primary colour.

11. Device for real-time rendering and generation of computer-generated video holograms from image data with depth information, which implements the method according to one or more of claims 1-10, comprising a 3D rendering graphics pipeline (3DPL), which in a first mode generates pixel values for the controllable pixels of a monitor by the conversion of a scene into pixelated image data in the form of a two-dimensional projection of the scene, where the pipeline is switchable extended by at least one holographic graphics pipeline (HPL) such that in a second mode complex hologram values are generated and a light modulator means (SLM) of a holographic display device (HAE) is encoded with these pixel values, whereby simultaneously or alternatively to the usual graphic 2D/3D representation of the scene an incident wave field is modulated by way of controlling the light modulator means (SLM) such that the desired scene is holographically reconstructed through interference in space.

12. Device according to claim 11 where the position of an observer defines a view of the scene and where the observer is assigned with at least one virtual observer window, which is situated in an observer plane near the observer eyes, and where the holographic graphics pipeline comprises:
-- Means for the separation of the scene data into parallel layers so as to obtain scene section data between two parallel section planes, each of which is situated at right angles to the viewing direction of the observer,
-- Means for the transformation of the scene section data of a layer into the observer window according to the propagation of the light waves emitted by this layer,
-- Means for the repetition of the steps of separation (1) and transformation (2), until the entire scene is transformed after successively displacing the section planes in the viewing direction, where the results of the individual transformations are added up,
-- Back-transformation means, where the aggregated data are transformed from the observer plane into a hologram plane which coincides with the position of a light modulator means, and which is situated at a final distance and parallel to the observer plane, so as to generate hologram data for the video hologram,
-- Encoding means, where after a normalisation step the data are converted into pixel values, which are transferred to the light modulator means in order to reconstruct the scene.

13. Device according to claim 11 or 12 for the generation of video holograms for a holographic display device (HAE) with a screen means, where the screen means is either the light modulator means (SLM) itself where the hologram of the scene is encoded, or an optical element on to which a hologram or wave front of the scene encoded on the light modulator means is imaged.

14. Holographic display device according to claim 13 where the optical element is a lens or a mirror.

## Revendications

1. Procédé de représentation et de génération d'hologrammes vidéo générés par ordinateur à partir de données d'image avec information de profondeur en temps réel, dans lequel, dans un premier mode, un pipeline graphique de représentation en 3D (3DLP) décrit la conversion d'une scène en données d'image tramées en tant que projection en 2D de ladite scène et génère des valeurs de pixels pour les pixels commandables d'un moniteur, dans lequel le pipeline est étendu par commutation de telle manière que, dans un deuxième mode, la génération de valeurs d'hologramme complexes et le codage comme valeurs de pixels pour un moyen de modulation lumineuse (SLM) d'un dispositif de restitution holographique (HAE) sont effectués sur au moins un pipeline graphique holographique (HPL), ce qui entraîne, simultanément ou alternativement à la représentation graphique usuelle en 2D/3D de la scène, la modulation d'un champ d'onde incident par commande du moyen de modulation lumineuse (SLM), de manière à reconstruire holographiquement la scène souhaitée par interférence dans l'espace.

2. Procédé selon la revendication 1, dans lequel, dans une première série d'étapes, le pipeline graphique de représentation en 3D comprend des opérations de coordination, des calculs d'éclairage, un découpage, afin de générer des données d'entrée pour le pipeline graphique holographique suivant.

3. Procédé selon la revendication 2, dans lequel des zones de mémoire supplémentaires sont affectées en tant que tampon de scène visible (VSB) à la première série d'étapes du pipeline graphique de représentation en 3D (3DLP), pour la mémorisation des données de résultat d'une suite de scènes d'une séquence vidéo.

4. Procédé selon la revendication 3, dans lequel la première série d'étapes du pipeline graphique de représentation en 3D (3DLP) génère pour chacune de plusieurs scènes successives des données de résultat pour un tampon de scène visible (VSB) correspondant, et dans lequel des valeurs d'hologramme complexes sont générées à partir de ces données par un ou plusieurs pipelines graphiques holographiques (HPL).

5. Procédé selon la revendication 4, dans lequel une scène de la séquence vidéo est affectée à chaque tampon de scène visible (VSB).

6. Procédé selon la revendication 5 avec une unité d'ordonnancement de commande, laquelle commande par séquences temporelles la première série d'étapes du pipeline graphique de représentation en 3D (3DLP), les tampons de scènes visibles (VSB) ainsi que les pipelines graphiques holographiques (HPL).

7. Procédé selon l'une ou plusieurs des revendications précédentes, dans lequel une vue d'une scène est fixée par la position d'un observateur, dans lequel au moins une fenêtre d'observateur virtuelle située à proximité des yeux sur un plan d'observateur est affectée à l'observateur, et dans lequel le pipeline graphique holographique (HPL) pour la génération des valeurs de pixels pour le moyen de modulation lumineuse comprend les étapes suivantes .
- étape (1) : séparation des données de scène en couches parallèles pour former des données de découpe de scène entre deux plans de découpe respectifs, perpendiculaires à la direction de position de l'observateur,
- étape (2) : transformation des données de découpe de scène d'une couche en fenêtre d'observateur suivant la propagation des ondes lumineuses partant de ladite couche,
- étape (3) : répétition des étapes de séparation (1) et de transformation (2) jusqu'à transformation de la scène d'ensemble après décalage successif des plans de découpe dans la direction de position, les résultats des différentes transformations étant additionnés,
- étape (4) : rétro-transformation, les données additionnées étant transformées en données d'hologramme pour l'hologramme vidéo, du plan d'observateur vers un plan d'hologramme parallèle d'éloignement fini à l'emplacement d'un moyen de modulation lumineuse,
- étape (5) : codage, la transformation en valeurs de pixels et le transfert vers le moyen de modulation lumineuse pour la reconstruction de la scène étant effectués après normalisation.

8. Procédé selon la revendication 7, dans lequel une transformation de Fourier ou de Fresnel est appliquée pour la transformation des données.

9. Procédé selon la revendication 8, dans lequel la représentation en 3D et la transformation ne sont effectuées que pour des contours de la scène.

10. Procédé selon la revendication 9, dans lequel, en cas de représentation en couleurs, le procédé est appliqué pour chaque couleur primaire.

11. Dispositif pour la représentation et la génération d'hologrammes vidéo générés par ordinateur à partir de données d'image avec information de profondeur en temps réel, lequel recourt au procédé selon l'une ou plusieurs des revendications 1 à 10, comprenant un pipeline graphique de représentation en 3D (3DLP) qui, dans un premier mode, génère des valeurs de pixels pour les pixels commandables d'un moniteur par conversion d'une scène en données d'image tramées en tant que projection en 2D de ladite scène, dans lequel le pipeline est étendu par commutation par au moins un pipeline graphique holographique (HPL) de telle manière que, dans un deuxième mode, sont effectués la génération de valeurs d'hologramme complexes et le codage comme valeurs de pixels pour un moyen de modulation lumineuse (SLM) d'un dispositif de restitution holographique (HAE), ce qui entraîne, simultanément ou alternativement à la représentation graphique usuelle en 2D/3D de la scène, la modulation d'un champ d'onde incident par commande du moyen de modulation lumineuse (SLM), de manière à reconstruire holographiquement la scène souhaitée par interférence dans l'espace.

12. Dispositif selon la revendication 11, dans lequel une vue d'une scène est fixée par la position d'un observateur, dans lequel au moins une fenêtre d'observateur virtuelle située à proximité des yeux sur un plan d'observateur est affectée à l'observateur, et dans lequel le pipeline graphique holographique comprend :
- des moyens de séparation des données de scène en couches parallèles pour former des données de découpe de scène entre deux plans de découpe respectifs, perpendiculaires à la direction de position de l'observateur,
- des moyens de transformation des données de découpe de scène d'une couche en fenêtre d'observateur suivant la propagation des ondes lumineuses partant de ladite couche,
- des moyens de répétition des étapes de séparation (1) et de transformation (2) jusqu'à transformation de la scène d'ensemble après décalage successif des plans de découpe dans la direction de position, les résultats des différentes transformations étant additionnés,
- des moyens de rétro-transformation, les données additionnées étant transformées en données d'hologramme pour l'hologramme vidéo, du plan d'observateur vers un plan d'hologramme parallèle d'éloignement fini à l'emplacement d'un moyen de modulation lumineuse,
- des moyens de codage, la transformation en valeurs de pixels et le transfert vers le moyen de modulation lumineuse pour la reconstruction de la scène étant effectués après normalisation.

13. Dispositif selon la revendication 11 ou la revendication 12 pour la génération d'hologrammes vidéo pour un dispositif de restitution holographique (HAE), avec un moyen d'écran, le moyen d'écran désignant soit le moyen de modulation lumineuse (SLM) en tant que tel, où l'hologramme de la scène est codé, soit un élément optique sur lequel est représenté un hologramme codé dans le moyen de modulation lumineuse ou un front d'onde de la scène codé dans le moyen de modulation lumineuse.

14. Dispositif de restitution holographique selon la revendication 13, dans lequel l'élément optique est une lentille ou un miroir.
